# EUROPEAN PATENT APPLICATION

(11) **EP 2 266 728 A1**
(43) Date of publication of application: **29.12.2010**
(21) Application number: 09727784.2
(22) Date of filing: 31.03.2009
(51) Int. Cl.: B22F 3/115, C23C 4/06

(54) **EXACT SPRAY FORMING AND LAYER BY LAYER COMPACTION REPAIRING AND MANUFACTURING EQUIPMENT**

(30) Priority: 31.03.2008 CN 200820107982 U
(71) Applicant: VTT Technical Research Centre Of Finland, Espoo (FI)
(72) Inventor: YANG, Yunfeng, Shanghai 201203 (CN)
(74) Representative: Lipsanen, Jari Seppo Einari
(86) International application number: PCT/CN2009/071085
(87) International publication number: WO 2009/121290

(57) **Abstract**

The present invention provides a repairing and manufacturing apparatus by precise injection forming and layer-by-layer rolling, said apparatus comprising the follow mechanisms or functional units: a injection unit, said injection unit comprising molten metal preparing or supplying means for providing molten metal and inert gas atomizing and injection means disposed downstream of said molten metal preparing or supplying means; and a repairing and manufacturing unit by layer-by-layer rolling, said repairing and manufacturing unit by layer-by-layer rolling comprising heating means disposed around said workpiece to be clad for preheating the surface of said workpiece to be clad, layer-by-layer rolling means disposed on one side of said metal cladding for rolling said metal cladding layer by layer, mechanical movement operating means for receiving said workpiece to be clad and a mechanism for detecting and controlling the thickness of the metal cladding connected to said layer-by-layer rolling means.

## Description

### TECHNICAL FIELD

The present invention relates to a repairing and manufacturing apparatus by precise injection forming and layer-by-layer rolling.

### BACKGROUND ART

Many mechanical parts, such as train wheels, metallurgy rollers, momentous shafts, are discarded as a whole even because of a little partial wear. For example, train wheels are worn due to friction with a rail, braking friction and the like during their running. Railway vehicles remain to be primary transport means of both passengers and goods all over the world. The number of train wheels which are discarded due to wear is several ten millions per year in the world. At present there is no practical method for repairing the same. Huge human and material resources comprising natural resources such as energy resources and transport capacities are used to remanufacture the train wheels.

It is possible to clad or plate a layer of metal at a high speed on a metal substrate by injection forming, but the cladding generally has a porosity of 0.5-2% which is hard to fulfill the request of mechanical properties of the wheels. If the worn wheels are subjected to an integral rolling or other hot pressing process after being clad, the shape and dimensional accuracy of the locations of the wheels that need no repairing could be damaged, simultaneously causing a large waste of energy resources and other processing costs.

At present there is a method for repairing workpieces by metal hot spraying process, but it can not be used to repair large metal parts working under high load because of the follow reasons. The bonding between the metal cladding and the original workpiece substrate is poor, the porosity of the metal cladding is higher than 5%, the efficiency of metal spraying with a single nozzle is low (only the order of 100 g/min), and excessive thermal stress will be produced by spraying on a large area.

In summary, in the present technical field there lacks a process and apparatus for repairing a worn metal part with high quality and manufacturing a composite metal part having a plurality of functional layers by the technique of high speed injection forming a metal cladding and hot rolling.

Therefore, in the present technical field there is an imminent need for a method and apparatus for repairing a large metal part working under high load with high efficiency and manufacturing a part having a plurality of functional layers that can eliminate the problems in the above-mentioned metal cladding processes, so that its metal cladding is compact and its mechanical property is close to or even beyond the mechanical property of the substrate.

### DISCLOSURE OF THE INVENTION

An object of the present invention is to obtain a repairing and manufacturing apparatus by precise injection forming and layer-by-layer rolling which can repair a large metal part working under high load with high efficiency and manufacture a part having a plurality of functional layers.

The present invention provides a repairing and manufacturing apparatus by precise injection forming and layer-by-layer rolling for repairing or manufacturing a workpiece to be clad (1) by injection forming and layer-by-layer rolling, said apparatus comprising the following mechanisms or functional units:
- a injection unit (100), said injection unit (100) comprising:
   - molten metal preparing or supplying means (5), said molten metal preparing or supplying means (5) providing molten metal (7);
   - inert gas atomizing and injection means disposed downstream of said molten metal preparing or supplying means (5), said inert gas atomizing and injection means (8) allowing said molten metal (7) to be atomized and injected onto said workpiece (1) to be clad so as to form a metal cladding (10);
- a repairing and manufacturing unit by layer-by-layer rolling (200), said repairing and manufacturing unit by layer-by-layer rolling (200) comprising:
   - heating means disposed around said workpiece (1) to be clad for preheating the surface of said workpiece (1) to be clad;
   - layer-by-layer rolling means (11) disposed on one side of said metal cladding (10) for rolling said metal cladding (10) layer by layer;
   - mechanical movement operating means (4) for receiving said workpiece (1) to be clad, said mechanical movement operating means (4) allowing said workpiece (1) to be clad to be moved relative to the molten metal (7) and said layer-by-layer rolling means (11);
   - a mechanism for detecting and controlling the thickness of the metal cladding (10) connected to said layer-by-layer rolling means (11) so as to allow a timely stop of the supplying or injection of said molten metal(7) upon the thickness of said metal cladding (10) achieves a preset thickness.

In a particular implementation of the present invention, said inert gas atomizing and injection means (8) comprises a molten metal duct and one or more inert gas nozzle adjacent to said molten metal duct.

In a particular implementation of the present invention, said layer-by-layer rolling means (11) is hydraulically or pneumatically controlled rolling means.

In a particular implementation of the present invention, said layer-by-layer rolling means (11) comprises one or more rolling wheel.

In a particular implementation of the present invention, said rolling wheel in the layer-by-layer rolling means (11) is a cylindrical or curved body of revolution.

In a particular implementation of the present invention, an inside or outside circulating cooling system is disposed around said rolling wheel.

In a particular implementation of the present invention, said heating means (3) is an induction heater.

In a particular implementation of the present invention, said molten metal preparing or supplying means (5) is selected from the group of a smelter, a holding furnace, a pouring ladle and a tundish.

In a particular implementation of the present invention, said mechanism for detecting and controlling the thickness of the metal cladding (12) is integrated with the layer-by-layer rolling means (11) by a displacement transducer.

In a particular implementation of the present invention, said workpiece to be clad is selected from the group of a worn part and a part of a composite structure.

The effects of the present invention are as follows:
(1) The reparation of worn parts can save natural resources, save energies, protect environment, and significantly reduce the manufacturing cost. The present invention also improves the production efficiency and service performance of metal parts.
(2) The present invention can repair a large metal part working under high load with high efficiency and manufacture a part having a plurality of functional layers, so that its metal cladding is compact and its mechanical property is close to or even beyond the mechanical property of a substrate.

### BRIEF DESCRIPTION OF THE DRAWINGS

Fig. 1 is a schematic view of a repairing and manufacturing apparatus by precise injection forming and layer-by-layer rolling according to embodiment 1 of the present invention.
Fig. 2 is a schematic view of a part obtained by a repairing and manufacturing method by precise injection forming and layer-by-layer rolling according to embodiment 2 of the present invention.

### BEST MODE FOR CARRYING OUT THE INVENTION

The aim of the present invention is to provide a repairing or remanufacturing method and apparatus for a worn part, which is reliable and superior in technological economy and is achieved by a liquid metal injection forming and layer-by-layer rolling process, so as to eliminate the problems and shortages of the metal cladding processes according to the prior art. The present invention is accomplished on the basis of above-said matters.

The concept of the present invention is as follow:

Utilizing a high temperature close to the melting point and an excellent rheological property of a metal jet for injection forming which is just deposited on a part to be repaired, it is possible to roll layer by layer at a low pressure, so as to obtain a compact metal cladding without obviously impairing the shape and dimensional accuracy of other portions of the part to be clad.

Various aspects of the present invention will be described in detail as follows:
**An Repairing and Manufacturing Apparatus by Precise Injection forming and Layer-by-layer Rolling**

The present invention provides a repairing and manufacturing apparatus by precise injection forming and layer-by-layer rolling for repairing or manufacturing a workpiece 1 to be clad by injection forming and layer-by-layer rolling, said apparatus comprising the following mechanisms or functional units:
- a injection unit 100, said injection unit 100 comprising:
   - molten metal preparing or supplying means 5, said molten metal preparing or supplying means 5 providing molten metal 7;
   - inert gas atomizing and injection means 8 disposed downstream of said molten metal preparing or supplying means 5, said inert gas atomizing and injection means 8 allowing the molten metal 7 therein to be atomized and injected onto said workpiece 1 to be clad so as to form a metal cladding 10;
- a repairing and manufacturing unit by layer-by-layer rolling 200, said repairing and manufacturing unit by layer-by-layer rolling 200 comprising:
   - heating means 3 disposed around said workpiece 1 to be clad for preheating the surface of said workpiece 1 to be clad;
   - layer-by-layer rolling means 11 disposed on one side of said metal cladding 10 for rolling said metal cladding 10 layer by layer;
   - mechanical movement operating means 4 for receiving said workpiece 1 to be clad, said mechanical movement operating means 4 allowing said workpiece 1 to be clad to be moved relative to the molten metal 7 and said layer-by-layer rolling means 11;
   - a mechanism for detecting and controlling the thickness of the metal cladding 12 connected to said layer-by-layer rolling means 11, so as to allow a timely stop of the supplying or injection of said molten metal 7 when the thickness of said metal cladding 10 achieves a preset thickness.

In the injection unit 100, common means in the art can be used as said molten metal preparing or supplying means 5, as long as it provides the molten metal and does not limit the object of the present invention.

In a particular implementation of the present invention, said molten metal preparing or supplying means 5 is selected from a smelter, a holding furnace, a pouring ladle or a tundish.

Said molten metal can be a pure metal or an alloy. Said molten metal can be consistent with the material of the workpiece to be clad, or different from the material of the workpiece to be clad as required so as to obtain a composite workpiece.

In the injection unit 100, a conventional inert gas atomizing and injection means can be used as said inert gas atomizing and injection means, as long as it does not limit the object of the present invention.

In a particular implementation of the present invention, said inert gas atomizing and injection means 8 comprises a molten metal duct and an inert gas nozzle. The number of said inert gas nozzle(s) can be set as one or more as required. There is no specific limitation on the disposition of the inert gas nozzle, as long as the molten metal in the molten metal duct can be atomized and injected. If there are a plurality of inert gas nozzles in a single inert gas atomizing and injection means, the distribution and orientation of the nozzles can be set as required. The nozzles can be fixed or movable.

In particular, said inert gas atomizing and injection means comprises a molten metal duct made from refractory material and an inert gas nozzle generally made from metal or ceramic. All the common materials in the art can be used as said refractory material, metal and ceramic, as long as they do not limit the object of the present invention.

In particular, there is no specific limitation on the kind of said inert gas, as long as it does not limit the object of the present invention. In particular, for example, the kind of said inert gas is consistent with that used for the heating means in the repairing and manufacturing unit by layer-by-layer rolling 200. Generally, nitrogen gas is commonly used when treating steel parts.

There is no limitation to the number of said inert gas atomizing and injection means. One or more atomizing and injection means can be used as required.

In a particular implementation of the present invention, the number of said inert gas atomizing and injection means 8 is two or more.

In particular, there can be a plurality of sets of inert gas atomizing and injection means (i.e. molten metal atomizing and injection means) operating simultaneously, and their distribution and orientation may vary according to the shape and the dimension of the workpiece to be repaired. They can be fixed or movable.

More particular, inert gas preparing or supplying means can be connected upstream of said inert gas atomizing and injection means 8. There is no specific limitation on said inert gas preparing or supplying means, and a conventional inert gas preparing or supplying means in the art can be used. More particular, said inert gas preparing or supplying means comprises all sorts of air separating means, pipeline transportation means or liquid gas supplying means.

In the repairing and manufacturing unit by layer-by-layer rolling 200, the heating means 3 for preheating the surface of said workpiece 1 to be clad is disposed around said workpiece 1 to be clad.

In a particular implementation of the present invention, said heating means 3 is an induction heater.

A conventional induction heater in the art can be used as said induction heater. In particular, examples of said induction heater include but are not limited to: an induction heater fixed in a injection chamber, or an active type induction heater.

In the repairing and manufacturing unit by layer-by-layer rolling 200, and in a particular implementation of the present invention, said layer-by-layer rolling means 11 comprises one or more rolling wheel.

Preferably, said rolling wheel is a cylindrical or curved body of revolution.

Preferably, an inside or outside circulating cooling system is further disposed around said rolling wheel. A conventional cooling medium in the art, in particular, such as water or other fluid, can be used as the cooling medium of said inside or outside circulating cooling system.

In a particular implementation of the present invention, said layer-by-layer rolling means 11 is hydraulically or pneumatically controlled rolling means.

Preferably, said rolling means can adjust the pressure according the characteristics of the cladding metal and the structure of the substrate part, so that the metal cladding can be compacted sufficiently, and the shape and dimensional accuracy of other portions of the part will not be impaired. In a particular implementation of the present invention, when the cladding metal is rolled layer by layer so as to be compacted, the rolling pressure is 200 ~ 2000 kg.

In the repairing and manufacturing unit by layer-by-layer rolling 200, said mechanism for detecting and controlling the thickness of the metal cladding 12 is integrated with the layer-by-layer rolling means 11 by a displacement transducer.

In the repairing and manufacturing unit by layer-by-layer rolling 200, there is provided mechanical movement operating means 4 for receiving said workpiece 1 to be clad, said mechanical movement operating means 4 allowing said workpiece 1 to be clad to be moved relative to the molten metal 7 and said layer-by-layer rolling means 11. A conventional mechanical movement operating means in the art can be used as said mechanical movement operating means 4, as long as it is capable of controlling the change of the position of said workpiece to be clad relative to the molten metal (for example, the molten metal in an atomized and injected form) and said layer-by-layer rolling means.

In particular, for example, said mechanical movement operating means 4 controls the relative motion such as rotation, reciprocation and the like between said workpiece to be clad and the molten metal and said layer-by-layer rolling means, so that the cladding metal is covered on the surface of the workpiece to be clad uniformly, rapidly, and layer by layer.

Said workpiece to be clad may be a worn part or a part of a composite structure. There is no limitation on the number of the workpieces to be clad, for example, one or more workpiece can be clad simultaneously.

Said workpiece to be clad can be a body of revolution, or can be symmetrical surfaces of a body which is not a body of revolution.

A vessel, such as a injection chamber providing a protective atmosphere of inert gas, can be disposed at the outside of said injection unit 100 and said repairing and manufacturing unit by layer-by-layer rolling 200.

Other aspects of the present invention are obvious to those skilled in the art in light of the disclosure of the present invention.

The present invention is not limited to the above description for the details, any change or modification without departing from the essential spirit of the present invention are incorporated in the scope of the present invention. The present invention is further illustrated below in connection with the particular embodiments. It is understood that these embodiments are intended to illustrate the present invention but not restrict the scope thereof. If a particular condition of an experimental method in the following embodiments is not indicated, it is generally according to a common condition or according to a condition suggested by the manufacturer. The proportion and percentage is based on weight, unless especially explained.

All the specialized and scientific terms used in the description have the same meanings as those familiar to people skilled in the art, unless otherwise defined or explained. In addition, any method and material that is similar or equivalent to the disclosure can be applied to the method of the present invention.

### Embodiment 1

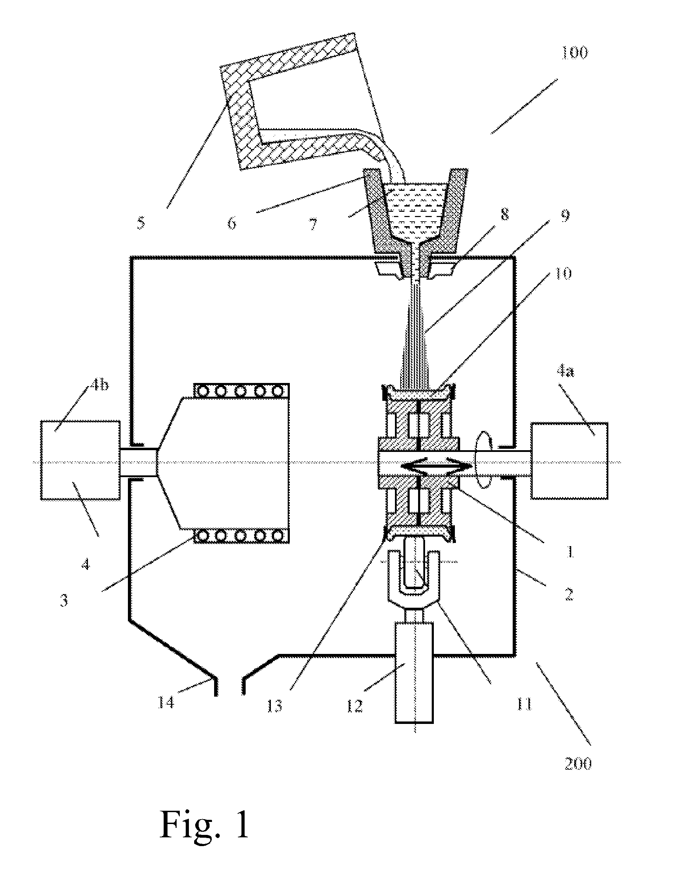

Fig. 1 is a schematic view of a method and apparatus according to the present invention. Repair of a pair of train wheels 1 which are discarded due to the wear on their excircles, are illustrated as an example.

A injection chamber 2 is provided in the apparatus, a injection unit 100 being disposed in the upper portion of the injection chamber 2, said injection unit 100 comprising: molten metal preparing or supplying means 5, said molten metal preparing or supplying means 5 providing molten metal 7; inert gas atomizing and injection means 8 disposed downstream of said molten metal preparing or supplying means 5, said inert gas atomizing and injection means 8 allowing said molten metal 7 to be atomized and injected onto said workpiece (that is, the wheels) 1 to be clad so as to form a metal cladding 10.

A repairing and manufacturing unit by layer-by-layer rolling 200 is disposed in the lower portion of the injection chamber 2, said repairing and manufacturing unit by layer-by-layer rolling 200 comprising: heating means 3 disposed around said workpiece 1 to be clad for preheating the surface of said workpiece 1 to be clad; layer-by-layer rolling means 11 disposed on one side of said metal cladding 10 for rolling said metal cladding 10 layer by layer; mechanical movement operating means 4 for receiving said workpiece 1 to be clad, said mechanical movement operating means 4 allowing said workpiece 1 to be clad to be moved relative to the molten metal 7 and said layer-by-layer rolling means 11; a mechanism for detecting and controlling the thickness of the metal cladding 12 connected to said layer-by-layer rolling means 11, so as to allow a timely stop of the supplying or injection of said molten metal 7 upon the thickness of said metal cladding 10 achieves a preset thickness.

The description in detail is as follows:

As shown in Fig. 1, an opening is perforated on the upper portion of the injection chamber 2 in order to position the molten metal preparing or supplying means 5, and said molten metal preparing or supplying means 5 can be a smelter or a tundish. An opening is perforated on either side of the injection chamber 2 in order to position the mechanical movement operating means 4a and the mechanical movement operating means 4b, respectively. An exhaust outlet 14 is disposed on one side of the lower portion of the injection chamber 2. Inert gas produced in injection forming enters a dedusting system (not shown in the figure) through the exhaust outlet 14, which is then discharged or recovered. An opening is disposed on the other side of the lower portion of the injection chamber 2 in order to allow the mechanism for detecting and controlling the thickness of the metal cladding 12 (that is, an operation sensing mechanism) to pass therethrough.

Also as shown in Fig. 1, the wheels 1 are disposed in the injection chamber 2, the surfaces of which are preheated by the heating means 3. The wheels are mounted on the mechanical movement operating means 4. An induction heater 3 can be fixed in the injection chamber 2, so that the wheels 1 to be repaired are pushed by the operating system 4a into the induction heater 3 in order to be heated. The induction heater 3 can also be movable, so that it can actively wrap around the surfaces to be repaired of the wheels 1 by the drive of the operating system 4b while the wheels 1 stay at a injection forming position beneath the nozzle 8. During the heating, the wheels 1 are driven by the operating system 4a to rotate at a proper speed (for example, 20-200 rpm), in order that they are uniformly heated and their deformation is reduced.

The mechanical movement operating means 4 is the operating system 4a, the operating system 4b or a combination of the two systems.

The molten metal 7 is poured from the molten metal preparing or supplying means 5 (a smelter or a pouring ladle) into a tundish 6 disposed in the opening on the upper portion of the injection chamber 2. An opening is disposed on the bottom of the tundish 6, so that said molten metal 7 enters the injection chamber through the opening, and is atomized and injected onto the wheels 1 after contacting with said inert gas atomizing and injection means 8.

The pressure applied on the metal cladding by the rolling wheel 11 is controlled by the operation sensing mechanism 12, which is also a detector for the thickness of the metal cladding 10, so as to ensure the stop of the injection when the thickness of the metal cladding achieves a preset cladding thickness.

A baffle 13 is disposed on the end faces of the surfaces to be repaired as required, in order to help establishment of an injection cladding on the end face portions and the protection of the portions that do not need any cladding.

The repairing process of the present invention is as follows:

Firstly, the surfaces to be repaired is applied a treatment which includes decontaminating and cleaning , shot or sand blasting treatment, machining and the like.

The parts to be repaired 1 are disposed in the injection chamber 2 as shown in Fig. 1. With the protection of the inert gas, the surfaces to be repaired are heated rapidly by the induction heater 3, the heating speed of which can be adjusted by the power, the shape and the operating frequency of the induction heater, so that the surfaces to be repaired achieve a proper temperature (which generally is 50%-95% of the melting point of the parts to be repaired, and here the melting point is 1493 °C) as soon as possible, and other portions such as their bores and spokes remain at a lower temperature so as to maintain their shape and dimensional accuracy. The induction heater 3 can be fixed in the injection chamber 2, so that the wheels 1 to be repaired are pushed by the operating system 4a into the induction heater 3 in order to be heated. The induction heater 3 can also be movable, so that it can actively wrap around the surfaces to be repaired of the wheels 1 by the drive of the operating system 4b while the wheels 1 stay at a injection forming position beneath the nozzle 8. During the heating, the wheels 1 are driven by the operating system 4a to rotate at a proper speed (for example, 20-200 rpm), in order that they are uniformly heated and their deformation is reduced.

When the surfaces to be repaired achieve the proper temperature, the wheels 1 go into the injection forming position to receive the cladding injected by the atomized molten metal. At the same time, the molten metal 7 is poured from the smelter or pouring ladle 5 into the tundish 6. After entering the injection chamber 2 from the bottom filling opening of the tundish 6, the molten metal is atomized into a molten metal atomized jet 9 by the nozzle 8 of inert gas under a high pressure (2-15 atmospheric pressure), and injected onto the surfaces to be repaired of the wheels 1 to form the metal cladding 10 by deposition. At the same time, the wheels 1 rotate and reciprocate at set speeds (for example, 20-100 rpm and 30-80 mm/s) beneath the atomized metal jet so that the required cladding thicknesses can be obtained at each portion to be repaired. The metal flow rate of a single injection device is 10-100 kg/min (for example, 50-70 kg/min), which is controlled by factors such as the diameter of the bottom filling opening of the tundish 6, the size of the nozzle 8 and so on. According to the shape and dimension characteristics of the parts to be repaired, a plurality of sets of nozzles can be used in the process to perform the injection cladding.

During the above-said injection cladding of metal, the rolling wheel 11 rolls the cladding metal at a high temperature layer by layer. Since the metal cladding which has just be deposited has a temperature approaching to the melting point, it has a good rheological property. The pressure applied on the metal cladding 10 by the rolling wheel 11 can compact the metal cladding even though it is very small (for example, 1-10 ton), and will not impair the shape and dimensional accuracy of the portions not to be repaired of the wheels 1. The pressure applied on the metal cladding 10 by the rolling wheel 11 is controlled by the operation sensing mechanism 12, which is also a detector for the thickness of the metal cladding 10, so as to ensure the stop of the injection when the thickness of the metal cladding achieves a preset cladding thickness.

A baffle 13 is disposed on the end faces of the surfaces to be repaired as required, in order to help the establishment of an injection cladding on the end face locations and the protection of the portions that do not need any cladding.

The inert gas used in the injection forming enters a dedusting system through an exhaust outlet 14, which is then discharged or recovered.

The pair of wheels which are metal clad and rolled layer by layer through the above process will become renewed or remanufactured products after a mechanical separation, common machining and a necessary heat treatment.

The properties of the obtained wheel are as follows:

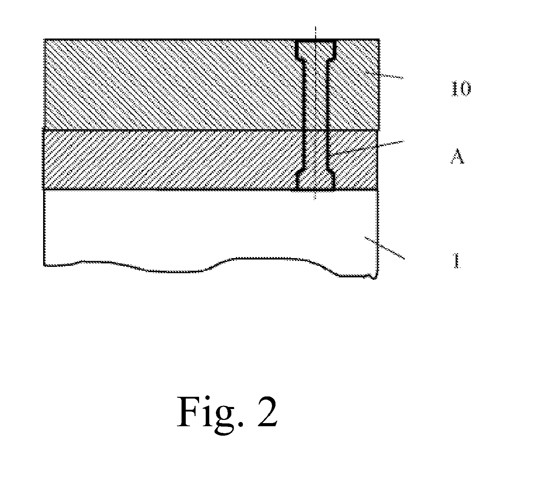

A wheel rim 1 which has a width of 138mm as shown in Fig. 2 is injection clad and rolled, so that a sample of metal cladding 10 is obtained. Finally, two samples are obtained: sample 1-4 and sample 2-4. The metals for the wheel rim and the cladding are both standard steels used in train wheels, the compositions of which are shown in Table 1. Further, a similar wheel rim is injection clad but not rolled, so that another sample, sample 1-1 , is obtained to be compared with the present invention, showing the advantages of the latter.

**Table 1. Steel grade and chemical compositions of the wheel steel**

| steel grade | chemical compositions ( % ) | | | | |
|---|---|---|---|---|---|
| | C | Si | Mn | P | S |
| CL60 | 0.5 5~ 0.65 | 0.17 ~ 0.37 | 0.50 ~ 0.80 | ≤0.035 | ≤0.040 |

The samples are applied a quenching and tempering heat treatment, and their hardness, tensile strength, elongation rate, and percentage reduction in area are measured according to Standard for Wheels of Rolled Steel TB/T2817 of Chinese Railway Ministry. When being measured, a test bar for tensile strength is cut from portion A (a tensile strength test bar sampling position) as shown in Fig. 2, on which a tensile test is conducted to compare with its standard mechanical properties. The results are shown in Table 2. The results show that samples 1-4 and 2-4 obtained by the method according to the present invention can fulfill Standard for Wheels of Rolled Steel (Note: the slightly lower tensile strength of sample 2-4 than the standard is caused by the relatively low hardness of the heat treatment but not any problem concerning the inherent quality of the material), and comparative sample 1-1 which is only subjected to injection cladding cannot fulfill the requirement. As shown in Fig. 2, the testing section of the tensile strength test bar spans the interface between the injection cladding and substrate simulator, which indicates that the results in these tensile tests also represent the lowest strength at the interface: there is a reliable bonding between the injection cladding and the clad wheel rim.

**Table 2. Comparison between mechanical properties of the wheel steel injection cladding subjected to rolling and that not subject to rolling and associated standard properties**

| | hardness ( HB ) surface/ core | tensile strength ( N/mm²) | elongation rate ( % ) | percentage reduction in area( % ) |
|---|---|---|---|---|
| Standard TB/T2817 (quenching and tempering) | 270~371 / 265~320 | ≥910 | ≥10 | ≥14 |
| clad but not rolled comparative sample 1-1 (quenching and tempering) | 317-335 / 286-292 | 890 | 7.75 | 9.5 |
| clad and rolled sample 1-4 (quenching and tempering) | 302 ~ 335 / 280 ~ 290 | 985 | 13 | 25.5 |
| clad and rolled sample 2-4 (quenching and tempering) | 289 / 271 | 860 | 16.5 | 54 |

All the documents mentioned in the present invention are incorporated in the present application by reference, as if each document is incorporated alone by reference. In addition, it can be understood that, those skilled in the art can make various changes or modifications to the present invention upon reading the above teachings of the present invention, and these equivalent forms also fall into the scope defined by the appended claims of the present application.

## Claims

1. A repairing and manufacturing apparatus by precise injection forming and layer-by-layer rolling , suitable for repairing or manufacturing a workpiece (1) to be clad by injection forming and layer-by-layer rolling, wherein said apparatus comprises the following mechanisms or functional units:
- a injection unit (100), said injection unit (100) comprising:
- molten metal preparing or supplying means (5), said molten metal preparing or supplying means (5) providing molten metal (7);
- inert gas atomizing and injection means (8) disposed downstream of said molten metal preparing or supplying means (5), said inert gas atomizing and injection means (8) allowing said molten metal (7) to be atomized and injected onto said workpiece (1) to be clad so as to form a metal cladding (10);
- a repairing and manufacturing unit by layer-by-layer rolling (200), said repairing and manufacturing unit by layer-by-layer rolling (200) comprising:
- heating means (3) disposed around said workpiece (1) to be clad for preheating the surface of said workpiece (1) to be clad;
- layer-by-layer rolling means (11) disposed on one side of said metal cladding (10) for rolling said metal cladding (10) layer by layer;
- mechanical movement operating means (4) for receiving said workpiece (1) to be clad, said mechanical movement operating means (4) allowing said workpiece (1) to be clad to be moved relative to the molten metal (7) and said layer-by-layer rolling means (11);
- a mechanism for detecting and controlling the thickness of the metal cladding (12) connected to said layer-by-layer rolling means (11) so as to allow a timely stop of the supplying or injection of said molten metal (7) upon the thickness of said metal cladding (10) achieves a preset thickness.

2. The apparatus according to claim 1, wherein said inert gas atomizing and injection means (8) comprises a molten metal duct and one or more inert gas nozzle adjacent to said molten metal duct.

3. The apparatus according to claim 1, wherein said layer-by-layer rolling means (11) is hydraulically or pneumatically controlled rolling means.

4. The apparatus according to claim 1, wherein said layer-by-layer rolling means (11) comprises one or more rolling wheel.

5. The apparatus according to claim 4, wherein said rolling wheel in the layer-by-layer rolling means (11) is a cylindrical or curved body of revolution.

6. The apparatus according to claim 4, wherein an inside or outside circulating cooling system is disposed around said rolling wheel.

7. The apparatus according to claim 1, wherein said heating means (3) is an induction heater.

8. The apparatus according to claim 1, wherein said molten metal preparing or supplying means (5) is selected from the group of a smelter, a holding furnace, a pouring ladle and a tundish.

9. The apparatus according to claim 1, wherein said mechanism for detecting and controlling the thickness of the metal cladding (12) is integrated with the layer-by-layer rolling means (11) by a displacement transducer.

10. The apparatus according to claim 1, wherein said workpiece to be clad is selected from the group of a worn part and a part of a composite structure.
